# EUROPÄISCHE PATENTSCHRIFT

(11) **EP 0 778 648 B1**
(45) Veröffentlichungstag und Bekanntmachung des Hinweises auf die Patenterteilung: **15.12.1999**
(21) Anmeldenummer: 96810769.8
(22) Anmeldetag: 11.11.1996
(51) Int. Cl.: H02K 3/14

(54) **Verröbelter Statorwicklungsstab mit erweitertem Feldausgleich**
Roebel-bar for a stator winding with extended field compensation
Barre d'enroulement de stator en forme de barre Roebel avec compensation du champ étendu

(30) Priorität: 05.12.1995 DE 19545307
(43) Veröffentlichungstag der Anmeldung: 11.06.1997
(73) Patentinhaber: ASEA BROWN BOVERI AG, 5400 Baden (CH)
(72) Erfinder: Haldemann, Johann, 5242 Birr (CH)
(74) Vertreter: Lück, Gert, Dr.

(56) Entgegenhaltungen:
- DE-A- 1 488 769
- US-A- 3 585 428
- TECHN.MITT. AEG-TELEFUNGEN, Bd. 63, 1973, BERLIN, Seiten 18-23, XP002029109 P. BAPAT: "Das Entstehen der Slingstromverluste in elektr. Masch. und Massnahmen zu ihrer Verringerung"

## Beschreibung

### TECHNISCHES GEBIET

Die Erfindung bezieht sich auf einen an den Enden kurzgeschlossenen Wicklungsstab von Wechselstrommaschinen mit erweitertem Feldausgleich gemäss dem Oberbegriff des Patentanspruchs 1.

Die Erfindung nimmt dabei Bezug auf einen Stand der Technik, wie er sich beispielsweise aus der DE-PS 14 88 769 ergibt.

### TECHNOLOGISCHER HINTERGRUND UND STAND DER TECHNIK

Statorwicklungsstäbe von grossen Wechselstrommaschinen bestehen regelmässig aus einer Vielzahl von gegeneinander isolierten und nach dem Roebel-Prinzip untereinander verdrillter Teilleiter, die an beiden Stabenden kurzgeschlossen sind (vgl Sequenz "Herstellung der Wicklungen elektrischer Maschinen", Springer-Verlag Wien, New York, 1973, Seiten 69 - 83, insbesondere Abb 19 auf Seite 79).

Der klassische Roebelstab weist eine 360°-Verdrillung im Nutteil auf. In den Stirnbügeln sind die Teilleiter parallel, also unverdrillt, geführt. Man hat aber sehr bald erkannt, dass auch ausserhalb der Nut die Stäbe von Wechselfeldern erfasst werden, welche die Stirnbügel von der Breitseite (Querkomponenten) wie von der Schmalseite (Radialkomponenten) durchsetzen.

Um unerwünschten Zusatzverlusten durch das Stirnfeld des Stators vorzubeugen, sind die Stirnbügel in gegeneinander isolierte Teilleiter unterteilt. Doch entstehen dabei immer noch Verluste durch sogenannte Schlingströme, die sich über die Verbindungshülse an den Stabenden schliessen. Aus diesem Grund wurden eine Reihe von Sondervedrillungen vorgeschlagen, die sich sowohl auf den Nut- oder Aktivteil des Stabes, als auch auf seinen Stirnbügelteil beziehen. G.Neidhöfer gibt in dem benannten Buch von Sequenz im Abschnitt 3.3 "Roebelstäbe mit erweitertem Feldausgleich" einen nahezu vollständigen Ueberblick über die verschiedenen Möglichkeiten, den erweiterten Feldausgleich zu erreichen und damit grössere Temeperaturdifferenzen und damit lokale Ueberhitzungen innerhalb des Stabes zu eliminieren. Eine besonders wirtschaftliche Lösung ist dabei die 90°/360°/90°-Verdrillung, d.h. die Teilleiter in beiden Stirnbügeln sind um jeweils 90°, die Teilleiter im Aktivteil sind um 360° verdrillt (vgl. Sequenz a.a.O. Abb.24 auf Seite 74, oder DE-PS 14 88 769).

Weil bei Maschinen mit kurzer Aktivteillänge, z.B. Hydro-Generatoren, infolge der Verroebelung in den Stirnbügeln die Gesamtlänge der Maschine grösser wird, und die Abstützung der weitausladenden Stirnbügel sehr aufwendig ist, wird im Konferenzbericht ISSM-93 "Proceedings of the International Symposium on Salient-Pole Maschines", 10. - 12.Oktober 1993, WUHAN, China, , Seite 384 - 389, im Beitrag von Xu Shanchun et al. "A New Transposition Technique of Stator Bars of The Hydrogenerator" ein neuartiger Weg zum erweiterten Feldausgleich vorgeschlagen, nämlich eine sogenannte Unterverroebelung ("non-360° transposition" oder "incomplete transposition") oder eine sogenannte Leerlänge ("transposition with a void") im Aktivteil in Kombination mit nichtverdrillten Stirnbügelteilen. Jeder der beiden "Sonderverdrillungen" erreichet eine merkliche Verkleinerung der Schlingströme, und sie sollen nach Aussagen des Konferenzberichts die Temperaturdifferenzen innerhalb des Stabes stark verkleinern.

### KURZE DARSTELLUNG DER ERFINDUNG

Ausgehend vom geschilderten Stand der Technik liegt der Erfindung die Aufgabe zugrunde, einen verroebelten Statorwicklungsstab mit erweitertem Feldausgleich zu schaffen, der eine noch weitergehende Unterdrückung der Schlingströme und damit Abflachung des Temperaturprofils im Leiterstab ermöglicht.

Diese Aufgabe wird erfindungsgemäss dadurch gelöst, dass die Teilleiter in beiden Stirnbügelabschnitten eine Verdrillung zwischen 60° und 120° aufweisen, und im Aktivteilabschnitt entweder eine Unterverroebelung vorgesehen ist, d.h. die Verdrillung im Aktivteilabschnitt gleichmässig und kleiner als 360° ist, oder bei vollständiger 360°-Verdrillung im Aktivteilabschnitt in Aktivteilmitte eine Leerlänge, d.h. ein unverdrillter Abschnitt, vorgesehen ist, während die Verdrillung im Aktivteilabschnitt ausserhalb dieses unverdrillten Abschnitts jeweils eine gleichmässige 180°-Verroebelung ist.

Die gemeinsame Anwendungen der Teillehren nach der DE-PS 14 88 769 (Sonderverroebelung mit 90°/360°/90°-Verdrillung) und einer Unterverroebelung/Leerlänge im Aktivteil nach XU Shanchun et al. a.a.O. führt zu einem Leiterstab, der eine nicht ohne weiteres vorhersehbare praktisch vollständige Unterdrückung der Schlingströme ermöglicht und damit eine nochmalige Abflachung des Temperaturprofils im Leiterstab erzielt wird.

Die Erfindung lässt sich bei allen mittleren und grossen elektrischen Maschinen wie Turbogeneratoren oder Hydrogeneratoren einsetzen.

Nachstehend werden anhand der Zeichnung die Erfindung und die ihr zugrundeliegenden Ueberlegungen anhand von Ausführungsbeispielen näher erläutert.

### KURZE BESCHREIBUNG DER ZEICHNUNG

In der Zeichnung zeigt:
- Fig.1: eine schematische Draufsicht auf einen bekannten Roebelstab mit erweitertem Feldausgleich mit 90°/360°/90°-Verdrillung;
- Fig.2: Diagramme von Roebelstäben mit verschiedenen Verdrillungen zur Verdeulichung der Wirkung des Eigenfeldes, und zwar für einen Roebelstab mit der bekannten 90°-360°-90°-Verroebelung (Fig.2a), einen Roebelstab mit Leerlänge (Fig.2b) und einen Roebelstab mit Unterverroebelung (Fig.2c);
- Fig.3: Diagramme von Roebelstäben mit verschiedenen Verdrillungen zur Verdeulichung der Wirkung des Fremdfeldes, und zwar für einen Roebelstab mit der bekannten 90°-360°-90°-Verroebelung (Fig.3a), einen Roebelstab mit Leerlänge (Fig.3b) und einen Roebelstab mit Unterverroebelung (Fig.3c);
- Fig.4: eine schematische Darstellung der Hälfte eines unterverroebelten Stabes mit fünf Teilleitern pro Säule mit 324°-Verdrillung.

### WEGE ZUR AUSFÜHRUNG DER ERFINDUNG

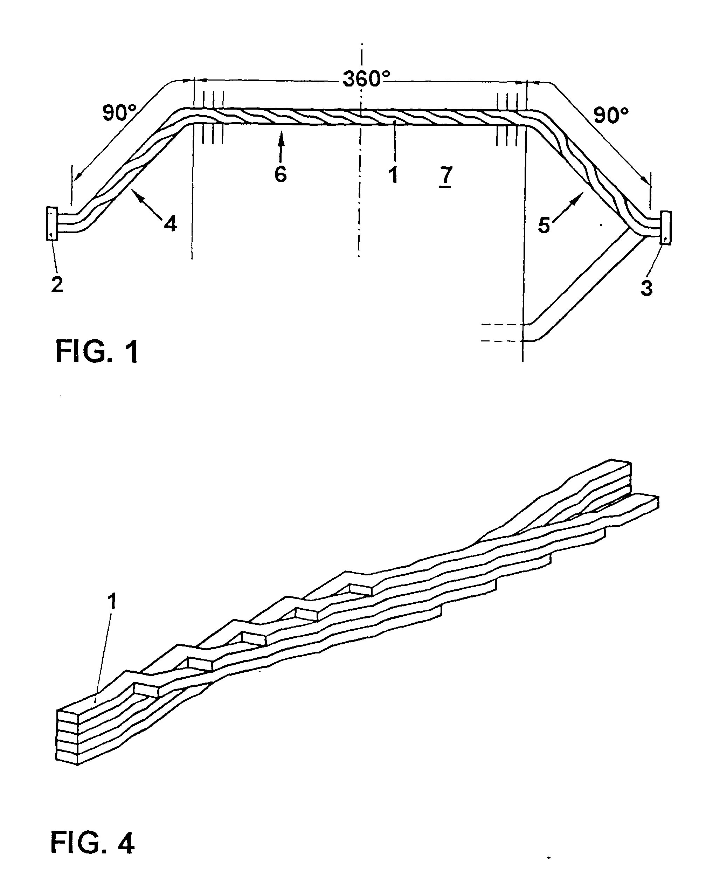

Der Roebelstab nach Fig.1 besteht aus gegeneinander elektrische isolierten Teilleitern 1, die an den Enden durch Oesen 2, 3 elektrisch und mechanisch miteinander verbunden sind. Er besteht aus zwei Stirnbügelabschnitten 4, 5 im linken und rechten Wickelkopf und einem Aktivteilabschnitt 6. Letzterer liegt vollständig in (nicht dargestellten) Nuten im Statorblechlörper 7 (Aktivteil) der elektrischen Maschine. Die beiden Stirnbügelteile 4,5 sind um jeweils 90° verroebelt, der Aktivteil 6 ist um 360° verroebelt.

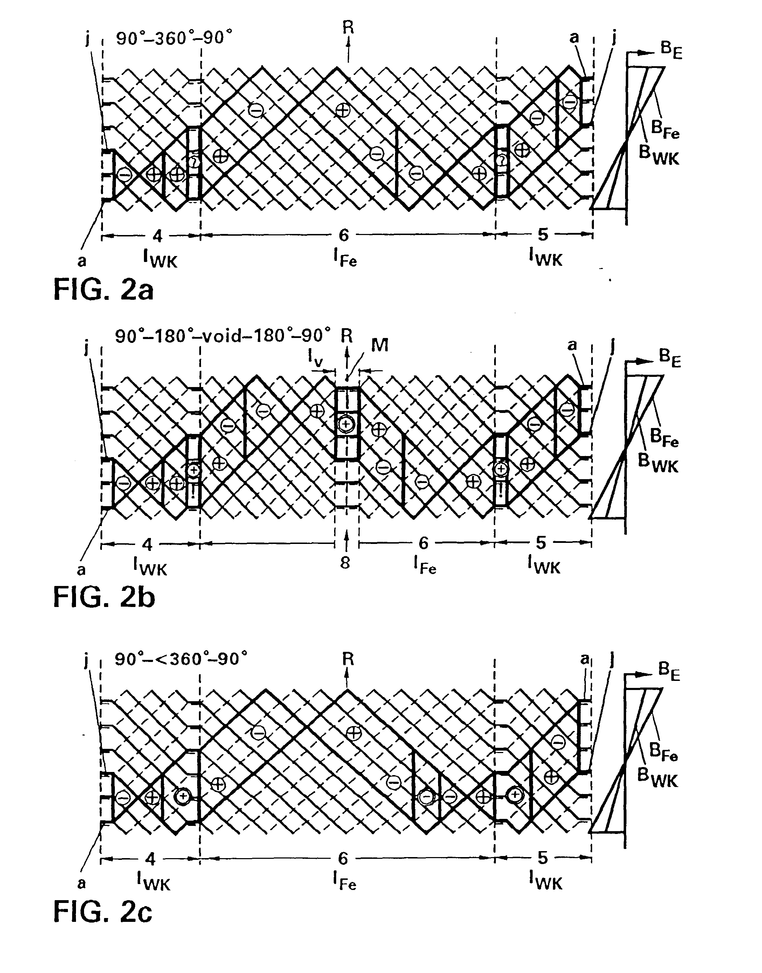

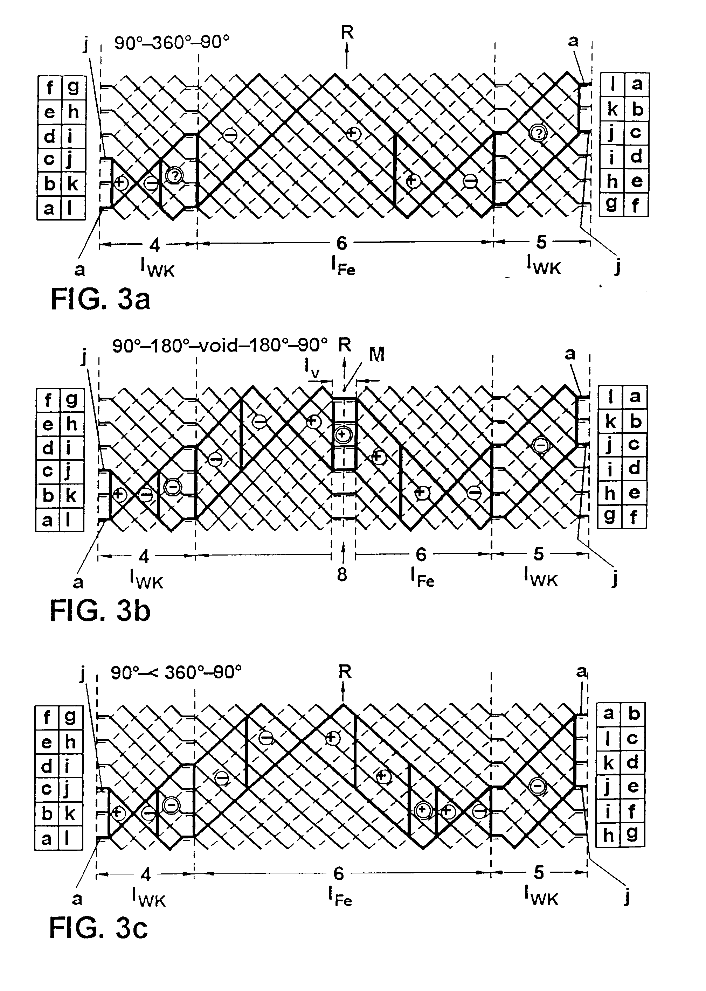

Das schematische Diagramm gemäss Fig.2a bzw. 3a für den Roebelstab mit 90°/360°/90°-Verdrillung nach Fig.1 zeigt der Verlauf der im Beispielsfall sechs Teilleiter a bis f bzw. g bis 1 pro Teilleitersäule im linken Stirnbügel 4, im Aktivteil 6 und im rechten Stirnbügel 5. Man erkennt deutlich, wie die einzelnen Teilleiter im Aktivteil 6 in der Nut jede Position einnehmen (= 360°-Verdrillung), während sie in den Stirnbügeln 90° verdrillt sind. Der Teilleiter d in beiden Stirnbügeln 4, 5 zusammengenommen am längsten gegen den Rotor R hin positioniert. Die anderen Teilleiter sind weniger lang gegen den Rotor R hin positioniert. Wie aus der bekannten Wirkung des elektromagnetischen Feldes auf den Stirnbügelteil eines unverroebelten Stabes hervorgeht, ist der Teilleiter d mit am meisten Strom belastet, die restlichen sukzessive mit weniger. Für das Verständnis der Erfindung genügt es festzuhalten, dass bei einer 90°-360°-90°-Verdrillung das Wickelkopf-Eigenfeld völlig kompensiert ist, während das Wickelkopf-Fremdfeld nur teilweise ausgeglichen wird (vgl. SEQUENZ a.a.O., insbesondere S.74, Abb. 24, und den zugehörigen Text auf Seite 75.

Hier setzt nun die Erfindung ein. Bildet man nun an einem in den Stirnbügeln 4, 5 mit 90° verroebelten Leiterstab den Aktivteilabschnitt 6 mit einer Unterverroebelung, d.h. einer Verroebelung mit weniger als 360°-Verdrillung aus, oder sieht man in Aktivteilmitte eine Leerlänge (=unverroebelter Abschnitt) mit 360°-Verdrillung ausserhalb der Leerlänge vor, so werden diejenigen Teilleiter, die hohe Ströme führen, länger am Nutgrund belassen. Sie geben dann Strom an diejenigen Teilleiter ab, die näher an der Nutöffnung, also mehr dem Rotor R benachbart sind. Dies sind aber gerade diejenigen Teilleiter, welche weniger Strom führen. Auf diese Weise lässt sich eine nahezu perfekte gleichmässige Stromverteilung im Leiterstab erreichen.

Die beiden Varianten Leerlänge und Unterverroebelung sind in den beiden Diagrammen nach Fig.2b und 3b bzw. Fig.2c und Fig.3c im Vergleich zum bekannten Roebelstab mit 90°-360°-90°-Verroebelung nach Fig.2a und Fig.3a schematisch dargestellt, wobei sich die Fig 2a, 2b und 2c auf die Eigenfeldbetrachtung, Fig.3a, 3b und 3c auf die Fremdfeldbetrachtung beziehen. Die Darstellung lehnt sich dabei an die in der Literatur übliche Darstellungsweise von Roebelstäben an, wie sie z.B. auch in der eingangs genannten DE-PS 14 88 769 verwendet wurde. So symbolisieren die von links oben nach rechts unten verlaufenden durchgehend eingezeichneten Linien Teilleiterbahnen, die sich bei Seitenansicht eines Zweiebenenstabes (Fig.1) auf dessen Vorderseite befinden; unterbrochene Linien zeigen die Bahnen auf der Rückseite, d.h. in der zweiten Teilleiterebene. Ferner ist in den Figuren 2a bis 2c der jeweilige Feldverlauf B_{E} des Eigenfeldes B_{Fe} im Aktivteil und der Feldverlauf des Eigenfeldes B_{WK} im Wickelkopf über die Stabhöhe dargestellt. Die Minus- und Pluszeichen im Kreis bedeuten dabei das Vorzeichen der in den Teilflächen der Elementarschleifen induzierten Spannungen unter Berücksichtigung des Umlaufsinns der Flächenkonturen sowie die Richtung des sie durchsetzen Flusses. Die in Fig.2a und 3a mit einem Fragezeichen im Kreis bezeichneten Flächen symbolisieren den nicht ausgeglichenen Teil am nicht verroebelten Uebergang vom Aktivteil 6 zu den Stirnbügeln 4 bzw. 5. In den Figuren 3a bis 3c ist ferner die Lage der im Beispielsfall 12 Teilleiter a bis 1 an den Stabenden eingezeichnet.

Bevor die Erfindung näher beschrieben wird, seien folgende Feldbetrachtungen vorangestellt:

Wie bei dem Stab mit 90°-360°-90°-Verroebelung nach Fig.3a zu erkennen ist, verbleibt bei der Fremdfeldbetrachtung ein Schleifenteil, der nicht kompensiert ist (Fragezeichen im Doppelkreis). Dieser nichtkompensierte Teil erzeugt Schlingströme, welche über die Stabhöhe sinh-förmig (antisymmetrisch) verteilt sind. Ziel der Leerlänge/Unterverroebelung im Aktivteil ist, diesen Rest auszugleichen. Wie später noch näher erläutert wird, gelingt dieser Ausgleich, in dem nun im Aktivteil 6 ein nichtausgeglichener Teil - symbolisiert durch ein Pluszeichen im Doppelkreis - erzeugt wird, der demjenigen im Stirnbügelteil 4 bzw. 5 - symbolisiert durch ein Minuszeichen im Doppelkreis - entgegenwirkt. Dazu ist zu bemerken, dass dieser Mechanismus nur dann funktioniert, wenn das Feld des Wickelkopfes am Ort des Stabes und das Nutfeld im Aktivteil etwa in Phase sind. Dies ist der Fall, da , wie bekannt, im Aktivteil sowie im Stirnbügelteil die Stromverdrängung in die gleiche Richtung (radial nach innen) erfolgt, was auf gleichphasige Felder zurückzuführen ist. Die relativ grossen unausgeglichenen Schleifenteile im Wickelkopf können durch relativ kleine Gegenschleifen im Aktivteil kompensiert werden, das das Nutquerfeld bedeuetend stärker ist.

Bei der Eigenfeldbetrachtung nach Fig.2a bis c ist zu erkennen, dass bei dem Stab mit 90°-360°-90°-Verroebelung die Schleifen vollständig kompensiert sind. Nur eventuell nichtverdrillte Stabteile, z.B. am Aktivteilaustritt, ergeben Restspannungen für Schlingströme. Eine Leerlänge 8 im Aktivteil 6 erzeugt nun Schlingspannungen, welche Schlingströme ergeben, die bezüglich der Stabhöhe cosh-förmig (symmetrisch) verteilt sind. Der Effekt von eventuell nicht verdrillten Stabteilen des Wickelkopfes unmittelbar am Aktivteilaustritt würde verstärkt. Im Gegensatz dazu bewirkt eine Unterverroebelung im Aktivteil das Gegenteil. Die nichtkompensierten Teile im Wickelkopf stehen dem nichtkompensierten Teil im Aktivteil entgegen und löschen sich gegenseitig aus, wobei diese Kompensation eventuell nicht zu 100% erfolgt, da die Unterverroebelung im Aktivteil auf die Kompensation des Wickelkopf-Fremdfeldes ausgerichtet ist. Es kann nun der Eindruck entstehen, dass mit der Erfindung an einem Ort eine Verbesserung erzielt wird (Fremdfeld), und am anderen Ort eine Verschlechterung (Eigenfeld). Dies ist in der Tat der Fall. Betrachtet man jedoch beide Ergebnisse zusammen, so resultiert gesamthaft gesehen eine Verbesserung, insbesondere bei der Unterverroebelung.

Der Leiterstab nach Fig.2b und Fig.3b weist in Aktivteilmitte M eine Leerlänge 8 auf, d.h. einen Abschnitt, in welchem die Teilleiter a bis 1 parallel geführt sind. Ausserhalb dieses Bereichs 8 links und rechts der Leerlänge beträgt die Verroebelung jeweils 180°. Die axiale Länge lᵥ dieser Leerlänge 8 ist in erster Näherung von der Grösse der Wickelkopfausladung l_{WK} abhängig. Mit modernen Rechenmethoden lässt sich bei einer konkreten Maschine diese Leerlänge vergleichsweise exakt bestimmen, als Richtwert kann jedoch angegeben werden, dass die Grösse lᵥ der Leerlänge 8 zwischen 5 und 10%, maximal 15%, der Ausladung l_{WK} betragen sollte, um einen praktisch vollkommenen (erweiterten) Feldausgleich im Wickelkopf zu erzielen. Als zweiter Richtwert kann für die Bemessung der Leerlänge 8 bei Turbogeneratoren angegeben werden, dass bis 10% der Aktivteillänge l_{Fe} betragen kann.

Der Leiterstab nach Fig.2c und Fig.3c weist im Aktivteil 6 eine Unterverroebelung, d.h. eine von der üblichen 360°-Verdrillung nach unten abweichende Verdrillung auf. Bei dem in Fig.4 dargestellten Leiterstab mit jeweils 5 Teilleitern 1 pro Säule, also insgesamt 10 Teilleitern beträgt die Verdrillung 9/10 von 360°, also 324°, die Unterverroebelung demgemäss 36°, was gleichzeitig bei einem solchen Stab die minimale Unterverroebelung darstellt.

Reale Roebelstäbe weisen eine weit höhere Anzahl von Teilleitern auf. Diese liegt typisch zwischen 80 und 120 Teilleitern pro Stab. Somit ergbibt sich bei einem Stab mit n Teilleitern und 360°-Verdrillung im Aktivteil eine minimale Unterverroebelung von U = 360°/n in der Grösse von 4,5° bei 80 Teilleitern und 3° bei 120 Teilleitern pro Leiterstab.

Analog zur Bemessung der Leerlänge ist auch der Grad der Unterverroebelung in erster Näherung abhängig von der Wickelkopfausladung. Je grösser diese Ausladung ist, desto grösser wird auch der Einfluss des Stirnfeldes im Wickelkopf und demgemäss sollte auch der Grad der Unterverröbelung im Aktivteil höher sein. Wie bei der Bemessung der Leerlänge lässt sich auch hier der Grad der Unterverroebelung mit modernen Rechenmethoden bei einer konkreten Maschine vergleichsweise exakt bestimmen, als Richtwert kann jedoch angegeben werden, dass die in Winkelgraden ca. 10° bis 15° betragen sollte, um einen praktisch vollkommenen (erweiterten) Feldausgleich im Wickelkopf zu erzielen.

In den vorstehenden Darlegungen wurde stets von einer Verdrillung in den Stirnbügeln von 90° ausgegangen. Umfangreiche Berechnungen haben gezeigt, dass auch mit Abweichungen von ±30°, also Verdrillungen von 60° bis 120° in den Stirnbügelabschnitten 4, 5, in Kombination mit Leerlängen oder Unterverroebelung im Aktivteil 6 ein praktisch perfekter Feldausgleich im Wickelkopf zu erzielen ist.

Prinzipiell ist es möglich, Stäbe herzustellen, die bei der angegebenen Verdrillung im Stirnbügelabschnitt neben einer Leerlänge auch eine Unterverroebelung aufweisen. Die Herstellung derartiger Leiterstäbe ist jedoch aufwendig, kann jedoch für Sonderfälle durchaus in Betracht gezogen werden.

### BEZEICHNUNGSLISTE

- 1: Teilleiter
- 2,3: Oesen
- 4: linker Stirnbügelabschnitt
- 5: rechter Stirnbügelabschnitt
- 6: Aktivteilabschnitt
- 7: Aktivteil (Statorblechkörper)
- 8: Leerlänge
- l_{Fe}: Aktivteillänge
- l_{WK}: Stirnbügelausladung
- lᵥ: Leerlänge
- M: Aktivteilmitte
- n: Anzahl Teilleiter pro Stab
- R: Rotor
- a-l: Teilleiterbezeichnungen in den Diagrammen
- U: in Winkelgraden gemessene Unterverroebelung

## Patentansprüche

1. An den Enden kurzgeschlossenen Wicklungsstab von Wechselstrommaschinen mit erweitertem Feldausgleich, welcher Leiterstab aus einer Vielzahl gegeneinander elektrisch isolierter Teilleiter (1) aufgebaut ist, welche Teilleiter nach dem Roebel-Prinzip verdrillt sind, wobei sowohl die Teilleiter in beiden Stirnbügelabschnitten (4,5) als auch im Aktivteilabschnitt (6) miteinader verdrillt sind, dadurch gekennzeichnet, dass die Teilleiter (1) in beiden Stirnbügelabschnitten eine Verdrillung zwischen 60 und 120°, vorzugsweise 90°, aufweisen, und im Aktivteilabschnitt (6) entweder eine Unterverroebelung vorgesehen ist, d.h. die Verdrillung im Aktivteilabschnitt (6) gleichmässig und kleiner als 360° ist, oder bei vollständiger 360°-Verdrillung im Aktivteilaschnitt (6) in Aktivteilmitte (M) eine Leerlänge (8), d.h. ein unverdrillter Abschnitt, vorgesehen ist, während die Verdrillung im Aktivteilabschnitt (6) ausserhalb dieses unverdrillten Abschnitts (8) jeweils eine gleichmässige 180 -Verroebelung ist.

2. Windungsstab nach Anspruch 1, dadurch gekennzeichnet, dass die Leerlänge (8) eine Länge (lᵥ) in der Grössenordnung von etwa 10% der Wickelkopfausladung (l_{wk}) aufweist.

3. Windungsstab nach Anspruch 1, dadurch gekennzeichnet, dass bei Unterverroebelung im Aktivteilabschnitt (6) die in Winkelgraden gemessene Unterverroebelung 10° bis 15° beträgt.

## Claims

1. Winding bar, which is short-circuited at the ends, of AC machines with extended field compensation, which conductor bar is constructed from a multiplicity of mutually electrically insulated conductor elements (1), which conductor elements are transposed according to the Roebel principle, both the conductor elements in the two end clip sections (4, 5) and in the active part section (6) being transposed with one another, characterized in that the conductor elements (1) in the two end clip sections have a transposition of between 60° and 120°, preferably 90°, and either an incomplete transposition is provided in the active part section (6), i.e. the transposition in the active part section (6) is uniform and less than 360°, or, given a complete 360° transposition in the active part section (6), a void (8), i.e. a nontransposed section, is provided in the centre (M) of the active part, while the transposition in the active part section (6) outside this nontransposed section (8) is in each case a uniform 180° transposition.

2. Winding bar according to Claim 1, characterized in that the void (8) has a length (lᵥ) of the order of magnitude of about 10% of the winding overhang (l_{wk}).

3. Winding bar according to Claim 1, characterized in that, in the case of incomplete transposition in the active part section (6), the incomplete transposition measured in angular degrees amounts to 10° to 15°.

## Revendications

1. Barre d'enroulement, mise en court-circuit aux extrémités, de machines à courant alternatif avec compensation de champ étendue, barre de conducteurs qui est constituée d'une pluralité de conducteurs partiels (1) électriquement isolés les uns des autres, conducteurs partiels qui sont torsadés selon le principe de Roebel, dans laquelle aussi bien les conducteurs partiels dans les deux portions des étriers d'extrémité (4, 5) que dans la portion de la partie active (6) sont torsadés les uns avec les autres, caractérisée en ce que les conducteurs partiels (1) présentent une torsion comprise entre 60° et 120°, de préférence de 90°, dans les deux portions des étriers d'extrémité, et il est prévu, dans la portion de la partie active (6), soit une sous-roebelisation, c'est-à-dire que la torsion dans la portion de la partie active (6) est uniforme et inférieure à 360°, soit une longueur morte (8) au milieu (M) de la partie active dans le cas d'une torsion complète de 360° dans la portion de la partie active (6), c'est-à-dire qu'il est prévu une portion non torsadée, tandis que la torsion dans la portion de la partie active (6), en dehors de cette portion non torsadée (8), est chaque fois une roebelisation uniforme à 180°.

2. Barre d'enroulement suivant la revendication 1, caractérisée en ce que la longueur morte (8) présente une longueur (lᵥ) de l'ordre de grandeur d'environ 10 % du porte-à-faux l_{wk} de la tête de bobine.

3. Barre d'enroulement suivant la revendication 1, caractérisée en ce que, dans le cas d'une sous-roebelisation dans la portion de la partie active (6), la sous-roebelisation mesurée en degrés d'angle vaut de 10° à 15°.
